(19) **Europäisches Patentamt / European Patent Office / Office européen des brevets**

(11) **EP 4 625 027 A1**

(12) # EUROPEAN PATENT APPLICATION
published in accordance with Art. 153(4) EPC

(43) Date of publication:
01.10.2025 Bulletin 2025/40

(21) Application number: 24752651.0

(22) Date of filing: 11.01.2024

(51) International Patent Classification (IPC):
*G02F 1/03* [(2006.01)]

(52) Cooperative Patent Classification (CPC):
G02F 1/025; G02F 1/03; G02F 1/035; H04B 10/50;
H04B 10/516; H04J 14/02

(86) International application number:
PCT/CN2024/071777

(87) International publication number:
WO 2024/164793 (15.08.2024 Gazette 2024/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 10.02.2023 CN 202310158437

(71) Applicant: Huawei Technologies Co., Ltd.
Shenzhen, Guangdong 518129 (CN)

(72) Inventors:
• ZHANG, Peijie
  Shenzhen, Guangdong 518129 (CN)
• LIU, Wei
  Shenzhen, Guangdong 518129 (CN)
• GUI, Chengcheng
  Shenzhen, Guangdong 518129 (CN)

(74) Representative: Goddar, Heinz J. et al
Boehmert & Boehmert
Anwaltspartnerschaft mbB
Pettenkoferstrasse 22
80336 München (DE)

(54) **ELECTRO-OPTICAL MODULATOR AND TRANSMITTER**

(57) Embodiments of this application disclose an electro-optic modulator and a transmitter. The electro-optic modulator includes a first waveguide, a second waveguide, at least one first modulation region, and at least one second modulation region. The first modulation region and the second modulation region are distributed in a first direction in which the first waveguide and the second waveguide extend. Electric fields applied to the first waveguide and the second waveguide in the first modulation region have some features different from features of electric fields applied to the first waveguide and the second waveguide in the second modulation region, so that an absolute value of an optical path difference generated by the first waveguide in the first modulation region is approximate to or equal to an absolute value of an optical path difference generated by the second waveguide in the second modulation region, and an absolute value of an optical path difference generated by the second waveguide in the first modulation region is approximate to or equal to an absolute value of an optical path difference generated by the first waveguide in the second modulation region. On the basis that the foregoing conditions are satisfied, impact of a chirp effect on transmission performance can be effectively reduced, and preferably, chirp-free electro-optic modulation can be implemented.

FIG. 2

**Description**

This application claims priority to Chinese Patent Application No. CN202310158437.7, filed with the China National Intellectual Property Administration on February 10, 2023 and entitled "ELECTRO-OPTIC MODULATOR AND TRANSMITTER", which is incorporated herein by reference in its entirety.

**TECHNICAL FIELD**

This application relates to the field of electro-optic modulation, and in particular, to an electro-optic modulator and a transmitter.

**BACKGROUND**

In an optical communication system, an optical module is an important part of the optical communication system, and mainly completes electro-optical conversion. With the development of optical modules toward higher rates, lower costs, and higher integration, on-chip integration technologies represented by silicon optical components are proposed and gradually mature. An electro-optic modulator is one of key components, and is a component that completes conversion from an electrical signal to an optical signal.

The electro-optic modulator generally includes a waveguide configured to transmit light and electrodes located on two sides of the waveguide. The electrodes are configured to apply an electric field to the waveguide to adjust a phase and strength of the light in the waveguide. In a high-speed long-distance transmission scenario, chirp is one of important factors that affect transmission performance, and a current electro-optic modulator is usually subject to a significant chirp effect.

**SUMMARY**

Embodiments of this application provide an electro-optic modulator and a transmitter, to effectively reduce impact of a chirp effect on transmission performance.

According to a first aspect, an embodiment of this application provides an electro-optic modulator. The electro-optic modulator includes a first waveguide, a second waveguide, at least one first modulation region, and at least one second modulation region. The first modulation region and the second modulation region are distributed in a first direction in which the first waveguide and the second waveguide extend. Electric fields applied to the first waveguide in the first modulation region and the second modulation region have a same direction and different magnitudes. Electric fields applied to the second waveguide in the first modulation region and the second modulation region have a same direction and different magnitudes. The electric fields applied to the first waveguide and the second waveguide in the first modulation region have different magnitudes and opposite directions. The electric fields applied to the first waveguide and the second waveguide in the second modulation region have different magnitudes and opposite directions. A difference between an absolute value of an optical path difference generated by the first waveguide in the first modulation region and an absolute value of an optical path difference generated by the second waveguide in the second modulation region is less than a preset value. A difference between an absolute value of an optical path difference generated by the second waveguide in the first modulation region and an absolute value of an optical path difference generated by the first waveguide in the second modulation region is less than the preset value.

In this implementation, the electric fields applied to the first waveguide and the second waveguide in the first modulation region have some features different from features of the electric fields applied to the first waveguide and the second waveguide in the second modulation region, so that the absolute value of the optical path difference generated by the first waveguide in the first modulation region is approximate to or equal to the absolute value of the optical path difference generated by the second waveguide in the second modulation region, and the absolute value of the optical path difference generated by the second waveguide in the first modulation region is approximate to or equal to the absolute value of the optical path difference generated by the first waveguide in the second modulation region. On the basis that the foregoing conditions are satisfied, impact of a chirp effect on transmission performance can be effectively reduced, and preferably, chirp-free electro-optic modulation can be implemented.

In some possible implementations, the electro-optic modulator includes a first electrode, a second electrode, a third electrode, and a fourth electrode. The first electrode, the second electrode, the third electrode, and the fourth electrode extend in the first direction separately. The first electrode, the second electrode, the third electrode, and the fourth electrode are sequentially distributed in a second direction. The first direction is perpendicular to the second direction. Every two adjacent electrodes in the first electrode, the second electrode, the third electrode, and the fourth electrode are for forming an electric field. This implementation provides a specific implementation of forming an electric field, and improves implementability of this solution.

In some possible implementations, the first electrode and the fourth electrode are grounded, and differential drive signals respectively enter the second electrode and the third electrode. It should be noted that, under a same drive voltage amplitude and to achieve a same phase shift, a component length required in a manner of differential driving is half of that in single-ended driving, so that a component size can be significantly shortened, to reduce costs. In addition, the differential driving has a stronger anti-interference capability than the single-ended driving. In addition, only one driver that outputs a differential signal is required for the differential driving, and there is no need to configure one driver for each of the first waveguide and the second waveguide, so that a size and power consumption of the electro-optic modulator are reduced.

In some possible implementations, the electro-optic modulator further includes a conversion region, the conversion region is located between the first modulation region and the second modulation region, and the first waveguide and the second waveguide form a cross structure in the conversion region. In the first modulation region, the first waveguide is located between the first electrode and the second electrode, and the second waveguide is located between the second electrode and the third electrode. In the second modulation region, the first waveguide is located between the second electrode and the third electrode, and the second waveguide is located between the first electrode and the second electrode. In this implementation, the first waveguide and the second waveguide in the conversion region form the cross structure, so that the electric fields applied to the first waveguide and the second waveguide in the first modulation region and the second modulation region have different features, and this solution has good practicability.

In some possible implementations, a first specified electrode structure is formed between the first electrode and the second electrode in the second modulation region, and the first specified electrode structure is configured to cause a direction of an electric field between the first electrode and the second electrode in the second modulation region to be opposite to a direction of an electric field between the first electrode and the second electrode in the first modulation region. A second specified electrode structure is formed between the second electrode and the third electrode in the second modulation region, and the second specified electrode structure is configured to cause a direction of an electric field between the second electrode and the third electrode in the second modulation region to be opposite to a direction of an electric field between the second electrode and the third electrode in the first modulation region. It should be understood that the first specified electrode structure and the second specified electrode structure are designed, so that an original direction of the electric field between the two electrodes may be changed, and the electric fields applied to the first waveguide and the second waveguide in the first modulation region and the second modulation region have different features. In addition, parameters of the specified electrode structures are designed, to optimize impedance matching and speed matching of a link and ensure a bandwidth advantage.

In some possible implementations, a third specified electrode structure is formed between the first electrode and the second electrode in the first modulation region, and the third specified electrode structure is configured to enhance strength of the electric field applied to the first waveguide. A fourth specified electrode structure is formed between the second electrode and the third electrode in the first modulation region, and the fourth specified electrode structure is configured to enhance strength of the electric field applied to the second waveguide. It should be understood that the third specified electrode structure and the fourth specified electrode structure are designed, so that the strength of the electric fields between the two electrodes can be enhanced, to help improve modulation efficiency.

In some possible implementations, the electro-optic modulator further includes a conversion region, the conversion region is located between the first modulation region and the second modulation region, and both the first waveguide and the second waveguide are of bending structures in the conversion region. In the first modulation region, the first waveguide is located between the first electrode and the second electrode, and the second waveguide is located between the second electrode and the third electrode. In the second modulation region, the first waveguide is located between the second electrode and the third electrode, and the second waveguide is located between the third electrode and the fourth electrode. In this implementation, both the first waveguide and the second waveguide in the conversion region are of the bending structures, so that the electric fields applied to the first waveguide and the second waveguide in the first modulation region and the second modulation region have different features, to improve scalability of this solution.

In some possible implementations, a first specified electrode structure is formed between the second electrode and the third electrode in the second modulation region, and the first specified electrode structure is configured to cause a direction of an electric field between the second electrode and the third electrode in the second modulation region to be opposite to a direction of an electric field between the second electrode and the third electrode in the first modulation region. A second specified electrode structure is formed between the third electrode and the fourth electrode in the second modulation region, and the second specified electrode structure is configured to cause a direction of an electric field between the third electrode and the fourth electrode in the second modulation region to be opposite to a direction of an electric field between the third electrode and the fourth electrode in the first modulation region. It should be understood that the first specified electrode structure and the second specified electrode structure are designed, so that an original direction of the electric field between the two electrodes may be changed, and the electric fields applied to the first waveguide and the second waveguide in the first modulation region and the second modulation region have different features. In addition, parameters of the specified electrode structures are designed, to optimize impedance matching and speed matching of a link and ensure a bandwidth advantage.

# EP 4 625 027 A1

In some possible implementations, a third specified electrode structure is formed between the first electrode and the second electrode in the first modulation region, and the third specified electrode structure is configured to enhance strength of the electric field applied to the first waveguide. A fourth specified electrode structure is formed between the second electrode and the third electrode in the first modulation region, and the fourth specified electrode structure is configured to enhance strength of the electric field applied to the second waveguide. It should be understood that the third specified electrode structure and the fourth specified electrode structure are designed, so that the strength of the electric fields between the two electrodes can be enhanced, to help improve modulation efficiency.

In some possible implementations, the first electrode is electrically connected to the fourth electrode in the first modulation region and the second modulation region. To be specific, a bridge electrode is established between the first electrode and the fourth electrode, to help suppress common-mode noise and improve anti-interference performance.

In some possible implementations, quantities of first modulation regions and second modulation regions are plural and are the same, every two consecutive first modulation regions are separated by one second modulation region, and every two consecutive second modulation regions are separated by one first modulation region. In other words, the first modulation region and the second modulation region may be sequentially arranged at an interval, and practical effects are good.

In some possible implementations, the electro-optic modulator further includes a beam splitting module and a beam combining module, two ends of the first waveguide are respectively connected to the beam splitting module and the beam combining module, and two ends of the second waveguide are respectively connected to the beam splitting module and the beam combining module. The beam splitting module is configured to: split input light, and separately transmit split light to the first waveguide and the second waveguide. The beam combining module is configured to combine the light transmitted by the first waveguide and the light transmitted by the second waveguide.

In some possible implementations, impedances of the first modulation region and the second modulation region that are adj acent match, and this helps improve modulation performance of the electro-optic modulator. It should be understood that, when there is a conversion region between the first modulation region and the second modulation region, impedances of the first modulation region, the conversion region, and the second modulation region match.

In some possible implementations, materials used by the first waveguide and the second waveguide include lithium niobate (Lithium Niobate, LN), silicon, silicon nitride, or another LN-like electro-optic material.

According to a second aspect, an embodiment of this application provides a transmitter. The transmitter includes at least one laser, a driver, and at least one electro-optic modulator described in any implementation of the first aspect. The at least one laser is configured to emit contiguous light. The driver is configured to drive the at least one electro-optic modulator to modulate the contiguous light to obtain an optical signal.

In some possible implementations, the transmitter includes a plurality of lasers and a plurality of electro-optic modulators, and the transmitter further includes a wavelength division multiplexer. The wavelength division multiplexer is configured to: multiplex optical signals output by the plurality of electro-optic modulators, and output a multiplexed optical signal.

In embodiments of this application, the electro-optic modulator includes the first waveguide, the second waveguide, the at least one first modulation region, and the at least one second modulation region. The first modulation region and the second modulation region are distributed in the first direction in which the first waveguide and the second waveguide extend. The electric fields applied to the first waveguide and the second waveguide in the first modulation region have some features different from features of the electric fields applied to the first waveguide and the second waveguide in the second modulation region, so that the absolute value of the optical path difference generated by the first waveguide in the first modulation region is approximate to or equal to the absolute value of the optical path difference generated by the second waveguide in the second modulation region, and the absolute value of the optical path difference generated by the second waveguide in the first modulation region is approximate to or equal to the absolute value of the optical path difference generated by the first waveguide in the second modulation region. On the basis that the foregoing conditions are satisfied, the impact of the chirp effect on the transmission performance can be effectively reduced, and preferably, the chirp-free electro-optic modulation can be implemented.

BRIEF DESCRIPTION OF DRAWINGS

FIG. 1 is a diagram of an optical fiber communication system;
FIG. 2 is a diagram of a first structure of an electro-optic modulator according to an embodiment of this application;
FIG. 3 is a diagram of a second structure of an electro-optic modulator according to an embodiment of this application;
FIG. 4 is a diagram of a third structure of an electro-optic modulator according to an embodiment of this application;
FIG. 5 is a diagram of a fourth structure of an electro-optic modulator according to an embodiment of this application;
FIG. 6 is a diagram of a fifth structure of an electro-optic modulator according to an embodiment of this application;

FIG. 7A, FIG. 7B, and FIG. 7C are a diagram of several distribution forms of a specified electrode structure in an electro-optic modulator;

FIG. 8 is a diagram of a sixth structure of an electro-optic modulator according to an embodiment of this application;

FIG. 9 is a diagram of a seventh structure of an electro-optic modulator according to an embodiment of this application; and

FIG. 10 is a schematic flowchart of manufacturing an electro-optic modulator according to an embodiment of this application.

## DESCRIPTION OF EMBODIMENTS

Embodiments of this application provide an electro-optic modulator and a transmitter, to effectively reduce impact of a chirp effect on transmission performance. In the specification, claims, and accompanying drawings of this application, the terms "first", "second", and the like (if any) are intended to distinguish between similar objects but do not necessarily indicate a specific order or sequence. It should be understood that data used in such a way are interchangeable in proper cases, so that embodiments described herein can be implemented in other orders than the order illustrated or described herein. In addition, the terms "include", "have", and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

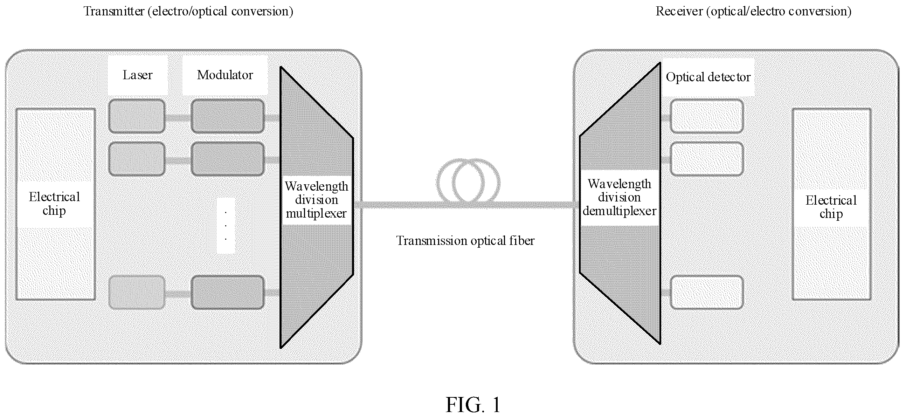

FIG. 1 is a diagram of an optical fiber communication system. As shown in FIG. 1, a transmitter includes an electrical chip, lasers, modulators, a wavelength division multiplexer, and the like. The transmitter is configured to implement conversion from an electrical signal to an optical signal. The laser is configured to emit laser. The electrical chip is configured to output an electrical signal to the modulator, to drive the modulator to modulate the laser emitted by the laser, so as to obtain an optical signal. The electrical chip may also be referred to as a "driver". Optionally, in a scenario of a plurality of channels of optical signals, the wavelength division multiplexer is configured to: multiplex optical signals of different wavelengths, and couple a multiplexed optical signal to an optical fiber for transmission. A receiver includes a wavelength division demultiplexer, detectors, an electrical chip, and the like. The receiver is configured to implement conversion from an optical signal to an electrical signal. The wavelength division demultiplexer is configured to separate optical signals of different wavelengths and separately output the optical signals to different detectors. The electrical chip is configured to drive the detectors to convert an optical signal into an electrical signal. It should be understood that the modulator is mainly used in the transmitter in the optical fiber communication system. The modulator may be specifically an electro-optic modulator, for example, a Mach-Zehnder modulator (Mach-Zehnder Modulator, MZM). The electrical signal is loaded to an optical carrier through external modulation to change a characteristic of the optical signal, for example, a phase or strength, to implement conversion from the electrical signal to the optical signal.

An electro-optic modulator provided in this application is described below in detail.

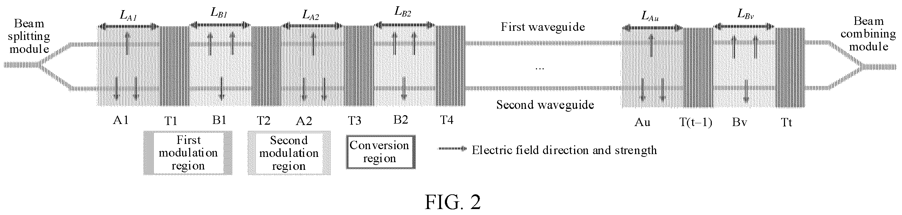

FIG. 2 is a diagram of a first structure of an electro-optic modulator according to an embodiment of this application. As shown in FIG. 2, the electro-optic modulator includes a first waveguide, a second waveguide, at least one first modulation region, and at least one second modulation region. The first waveguide and the second waveguide extend in a first direction. The first modulation region and the second modulation region are distributed in the first direction. It should be understood that specific quantities and arrangement manners of the first modulation region and the second modulation region are not limited in this application. FIG. 2 is used as an example. The electro-optic modulator includes u first modulation regions and v second modulation regions. The u first modulation regions are respectively denoted as A1, A2, ..., Au, and the v second modulation regions are respectively denoted as B1, B2, ..., Bv. In an example, the first modulation region and the second modulation region may be sequentially arranged at an interval, that is, u=v, and an arrangement manner of the first modulation regions and the second modulation regions is A1, B1, A2, B2, ..., Au, and Bv.

In some possible implementations, the electro-optic modulator further includes a beam splitting module and a beam combining module, two ends of the first waveguide are respectively connected to the beam splitting module and the beam combining module, and two ends of the second waveguide are respectively connected to the beam splitting module and the beam combining module. The beam splitting module is configured to: split input light, and separately transmit split light to the first waveguide and the second waveguide. The beam combining module is configured to combine the light transmitted by the first waveguide and the light transmitted by the second waveguide. It should be understood that the first waveguide and the second waveguide may use lithium niobate (Lithium Niobate, LN), silicon, silicon nitride, barium titanate ($BaTiO_3$), or another LN-like electro-optic material. This is not specifically limited herein.

It should be noted that electric fields are formed in both the first modulation region and the second modulation region, and a difference lies in that the electric field formed in the first modulation region and the electric field formed in the second modulation region have different features. It should be understood that when electric fields are applied to the first waveguide and the second waveguide from the outside, material refractive indexes of the first waveguide and the second waveguide may change due to linear electro-optic effects of the electro-optic material. The change may change a propagation characteristic of light in the waveguides, for example, a phase, an amplitude, or polarization of the light, to modulate the light transmitted in the waveguides. Impedances of the first modulation region and the second modulation region that are adjacent match, and this helps improve modulation performance of the electro-optic modulator. Features of the electric fields in the first modulation region and the second modulation region are further described below.

A direction of an electric field applied to the first waveguide in the first modulation region is the same as a direction of an electric field applied to the first waveguide in the second modulation region, and a direction of an electric field applied to the second waveguide in the first modulation region is the same as a direction of an electric field applied to the second waveguide in the second modulation region. In an example, as shown in FIG. 2, a direction of an electric field applied to the first waveguide in each modulation region remains upward, and a direction of an electric field applied to the second waveguide in each modulation region remains downward.

The electric fields applied to the first waveguide and the second waveguide in the first modulation region have different magnitudes and opposite directions. The electric fields applied to the first waveguide and the second waveguide in the second modulation region have different magnitudes and opposite directions. In an example, as shown in FIG. 2, in the first modulation region, strength of the electric field applied to the first waveguide is greater than strength of the electric field applied to the second waveguide, and in the second modulation region, strength of the electric field applied to the first waveguide is less than strength of the electric field applied to the second waveguide.

The magnitude of the electric field applied to the first waveguide in the first modulation region is different from the magnitude of the electric field applied to the first waveguide in the second modulation region, and the magnitude of the electric field applied to the second waveguide in the first modulation region is different from the magnitude of the electric field applied to the second waveguide in the second modulation region. In an example, as shown in FIG. 2, the strength of the electric field applied to the first waveguide in the first modulation region is greater than the strength of the electric field applied to the first waveguide in the second modulation region, and the strength of the electric field applied to the second waveguide in the first modulation region is less than the strength of the electric field applied to the second waveguide in the second modulation region.

A difference between an absolute value of an optical path difference generated by the first waveguide in the first modulation region and an absolute value of an optical path difference generated by the second waveguide in the second modulation region is less than a preset value. A difference between an absolute value of an optical path difference generated by the second waveguide in the first modulation region and an absolute value of an optical path difference generated by the first waveguide in the second modulation region is less than the preset value. It should be understood that, Optical path difference = Refractive index difference of a waveguide $\times$ Waveguide length, where the refractive index difference of the waveguide is positively correlated with strength of an electric field applied to the waveguide. On the basis that the foregoing conditions are satisfied, impact of a chirp effect on transmission performance can be effectively reduced. Preferably, the difference between the absolute values of the foregoing two optical path differences is exactly equal to the other difference, and chirp-free electro-optic modulation may be implemented. In other words, the following formulas are satisfied:

$$|Nx_{A1} \times L_{A1} + \cdots + Nx_{Au} \times L_{Au}| = |Ny_{B1} \times L_{B1} + \cdots + Ny_{Bv} \times L_{Bv}|$$

$$|Ny_{A1} \times L_{A1} + \cdots + Ny_{Au} \times L_{Au}| = |Nx_{B1} \times L_{B1} + \cdots + Nx_{Bv} \times L_{Bv}|$$

x represents the first waveguide. y represents the second waveguide. $Nx_{A1}$ represents a refractive index difference of the first waveguide in the A1 modulation region. $L_{A1}$ represents a length of the A1 modulation region in the first direction. $Nx_{Au}$ represents a refractive index difference of the first waveguide in the Au modulation region. $L_{Au}$ represents a length of the Au modulation region in the first direction. $Ny_{B1}$ represents a refractive index difference of the second waveguide in the B1 modulation region. $L_{B1}$ represents a length of the B1 modulation region in the first direction. $Ny_{Bv}$ represents a refractive index difference of the second waveguide in the Bv modulation region. $L_{Bv}$ represents a length of the Bv modulation region in the first direction. $Ny_{A1}$ represents a refractive index difference of the second waveguide in the A1 modulation region. $Ny_{Au}$ represents a refractive index difference of the second waveguide in the Au modulation region. $Nx_{B1}$ represents a refractive index difference of the first waveguide in the B1 modulation region. $Nx_{Bv}$ represents a refractive index difference of the first waveguide in the Bv modulation region.

It should be noted that, on the basis that the foregoing formulas are satisfied, specific lengths of each first modulation region and each second modulation region in the first direction are not limited in this application, specific strength of electric fields applied to the first waveguide and the second waveguide in each first modulation region is not limited, and specific strength of the electric field applied to the first waveguide and the second waveguide in each second modulation region is not limited. In other words, specific refractive index differences of the first waveguide and the second waveguide in each first modulation region are not limited, and specific refractive index differences of the first waveguide and the second waveguide in each second modulation region are not limited. In an example, $L_{A1} = L_{A2} = ... = L_{Au}$, $L_{B1} = L_{B2}$

$=...=L_{Bv}$, $Nx_{A1} = Nx_{A2} =...= Nx_{Au}$, $Ny_{B1} = Ny_{B2} = \cdots = Ny_{Bv}$, $Ny_{A1} = Ny_{A2} =...= Ny_{Au}$, and $Nx_{B1} = Nx_{B2} = \cdots = Nx_{Bv}$.

In some possible implementations, a conversion region is further disposed between two adjacent modulation regions, and in the conversion region, the first waveguide and the second waveguide have different structures, for example, a cross structure, a bending structure, and an extension structure, to implement features of electric fields in different modulation regions described above with reference to a specific electrode distribution manner. Preferably, impedances of the first modulation region, the conversion region, and the second modulation region match, and this helps improve modulation performance. It should be understood that, although the structures of the first waveguide and the second waveguide in the conversion region may change, extension directions of the first waveguide and the second waveguide are defined based on directions to which the first waveguide and the second waveguide extend as a whole. A structure of a section of waveguide in the conversion region does not affect the directions to which the first waveguide and the second waveguide extend as a whole. In other words, the first waveguide and the second waveguide have same extension directions as a whole.

The specific electrode distribution manner and the structures of the first waveguide and the second waveguide in the conversion region are further described below.

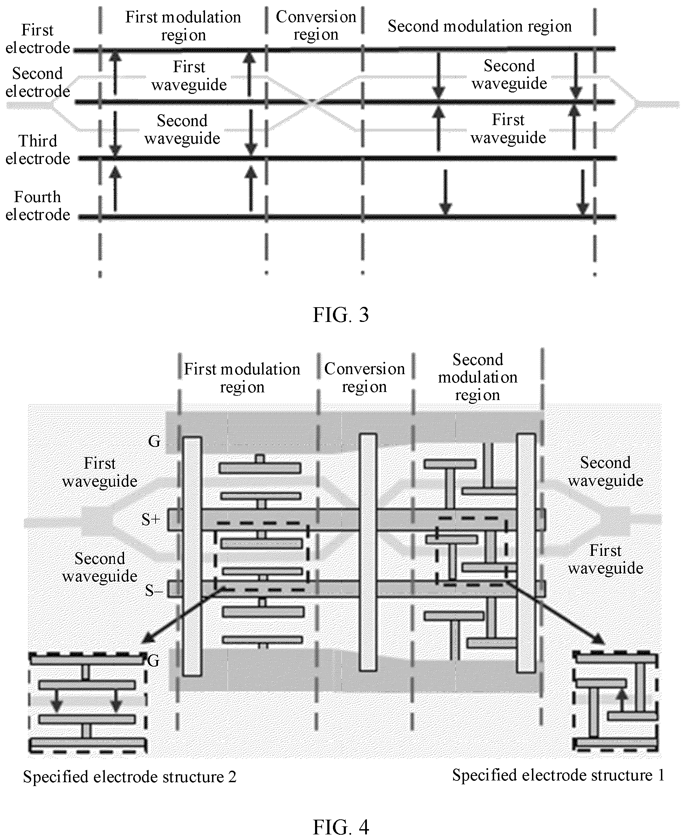

FIG. 3 is a diagram of a second structure of an electro-optic modulator according to an embodiment of this application. As shown in FIG. 3, the electro-optic modulator includes a first electrode, a second electrode, a third electrode, and a fourth electrode. An extension direction of each of the foregoing four electrodes is the same as extension directions of a first waveguide and a second waveguide. In addition, the foregoing four electrodes are sequentially distributed in a second direction perpendicular to the extension direction. An electric field is formed between every two adjacent electrodes of the foregoing four electrodes. In a possible implementation, the first waveguide and the second waveguide form a cross structure in a conversion region. Specifically, in a first modulation region, the first waveguide is located between the first electrode and the second electrode, and the second waveguide is located between the second electrode and the third electrode; and in a second modulation region, the first waveguide is located between the second electrode and the third electrode, and the second waveguide is located between the first electrode and the second electrode. It should be noted that directions of electric fields and strength of the electric fields between the electrodes in the first modulation region and the second modulation region satisfy the features described in the foregoing embodiment shown in FIG. 2, and details are not described herein again.

FIG. 4 is a diagram of a third structure of an electro-optic modulator according to an embodiment of this application. As shown in FIG. 4, in an example, a first electrode and a fourth electrode are G electrodes, in other words, the first electrode and the fourth electrode are grounded. Differential drive signals respectively enter a second electrode and a third electrode, and the second electrode and the third electrode may be respectively denoted as an S+ electrode and an S- electrode. Positions of the S+ electrode and the S- electrode may be interchangeable. It should be noted that, under a same drive voltage amplitude and to achieve a same phase shift, a component length required in a manner of differential driving is half of that in single-ended driving, so that a component size can be significantly shortened, to reduce costs. In addition, the differential driving has a stronger anti-interference capability than the single-ended driving. In addition, only one driver that outputs a differential signal is required for the differential driving, and there is no need to configure one driver for each of the first waveguide and the second waveguide, so that a size and power consumption of the electro-optic modulator are reduced.

It should be understood that strength of an electric field between the S+ electrode and the S- electrode is twice strength of an electric field between the S+ electrode and the G electrode, so that the following conditions are satisfied:

$$|Nx_{A1} \times L_{A1}| = |Ny_{B1} \times L_{B1}|$$

$$|Ny_{A1} \times L_{A1}| = |Nx_{B1} \times L_{B1}|$$

Therefore, the features related to the strength of the electric fields and the optical path differences in the first modulation region and the second modulation region that are described in the foregoing embodiment shown in FIG. 2 are satisfied.

In a possible implementation, in the second modulation region, specified electrode structures 1 are separately formed between the S+ electrode and the G electrode and between the S+ electrode and the S- electrode. The specified electrode structures 1 are configured to cause a direction of an electric field between the S+ electrode and the G electrode in the second modulation region to be opposite to a direction of an electric field between the S+ electrode and the G electrode in the first modulation region, and cause a direction of an electric field between the S+ electrode and the S- electrode in the second modulation region to be opposite to a direction of an electric field between the S+ electrode and the S- electrode in the first modulation region, so that the features related to the directions of the electric fields in the first modulation region and the second modulation region that are described in the foregoing embodiment shown in FIG. 2 are satisfied. In an example, the specified electrode structure 1 may be an inverted T-shape electrode structure shown in FIG.

4. A specific quantity of inverted T-shape electrode structures is not limited in this application.

In a possible implementation, in the first modulation region, specified electrode structures 2 are separately formed between the S+ electrode and the G electrode and between the S+ electrode and the S- electrode. The specified electrode structure 2 between the S+ electrode and the G electrode is configured to enhance strength of an electric field applied to the first waveguide, and the specified electrode structure 2 between the S+ electrode and the S- electrode is configured to enhance strength of an electric field applied to the second waveguide. In an example, the specified electrode structure 2 may be a T-shape electrode structure shown in FIG. 4. A specific quantity of T-shape electrode structures is not limited in this application.

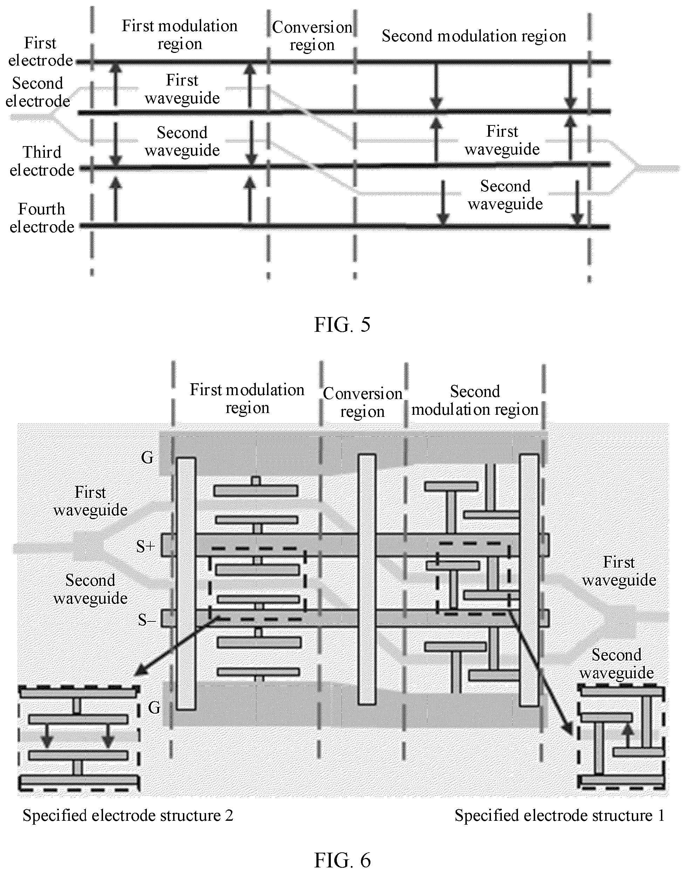

FIG. 5 is a diagram of a fourth structure of an electro-optic modulator according to an embodiment of this application. Different from the electro-optic modulator shown in FIG. 3, as shown in FIG. 5, both a first waveguide and a second waveguide are of bending structures in a conversion region. Specifically, in a first modulation region, the first waveguide is located between a first electrode and a second electrode, and the second waveguide is located between the second electrode and a third electrode; and in a second modulation region, the first waveguide is located between the second electrode and the third electrode, and the second waveguide is located between the third electrode and a fourth electrode. It should be noted that directions of electric fields and strength of the electric fields between the electrodes in the first modulation region and the second modulation region satisfy the features described in the foregoing embodiment shown in FIG. 2, and details are not described herein again.

FIG. 6 is a diagram of a fifth structure of an electro-optic modulator according to an embodiment of this application. As shown in FIG. 6, in an example, a first electrode and a fourth electrode are G electrodes, in other words, the first electrode and the fourth electrode are grounded. Differential drive signals respectively enter a second electrode and a third electrode, and the second electrode and the third electrode may be respectively denoted as an S+ electrode and an S-electrode. Positions of the S+ electrode and the S- electrode may be interchangeable. It should be understood that strength of an electric field between the S+ electrode and the G electrode is equal to strength of an electric field between the S- electrode and the G electrode, strength of an electric field between the S+ electrode and the S- electrode is twice the strength of the electric field between the S+ electrode and the G electrode, and the strength of the electric field between the S+ electrode and the S- electrode is also twice the strength of the electric field between the S-electrode and the G electrode, so that the following conditions are satisfied:

$$|Nx_{A1} \times L_{A1}| = |Ny_{B1} \times L_{B1}|$$

$$|Ny_{A1} \times L_{A1}| = |Nx_{B1} \times L_{B1}|$$

Therefore, the features related to the strength of the electric fields and the optical path differences in the first modulation region and the second modulation region that are described in the foregoing embodiment shown in FIG. 2 are satisfied.

In a possible implementation, in the second modulation region, specified electrode structures 1 are separately formed between the S- electrode and the G electrode and between the S+ electrode and the S- electrode. The specified electrode structures 1 are configured to cause a direction of an electric field between the S- electrode and the G electrode in the second modulation region to be opposite to a direction of an electric field between the S- electrode and the G electrode in the first modulation region, and cause a direction of an electric field between the S+ electrode and the S- electrode in the second modulation region to be opposite to a direction of an electric field between the S+ electrode and the S- electrode in the first modulation region, so that the features related to the directions of the electric fields in the first modulation region and the second modulation region that are described in the foregoing embodiment shown in FIG. 2 are satisfied. In an example, the specified electrode structure 1 may be an inverted T-shape electrode structure shown in FIG. 6. A specific quantity of inverted T-shape electrode structures is not limited in this application.

In a possible implementation, in the first modulation region, specified electrode structures 2 are separately formed between the S+ electrode and the G electrode and between the S+ electrode and the S- electrode. The specified electrode structure 2 between the S+ electrode and the G electrode is configured to enhance strength of an electric field applied to the first waveguide, and the specified electrode structure 2 between the S+ electrode and the S- electrode is configured to enhance strength of an electric field applied to the second waveguide. In an example, the specified electrode structure 2 may be a T-shape electrode structure shown in FIG. 4. A specific quantity of T-shape electrode structures is not limited in this application.

In a possible implementation, the first electrode is electrically connected to the fourth electrode, to be specific, a bridge electrode is established between the first electrode and the fourth electrode, to help suppress common-mode noise and improve anti-interference performance. It should be understood that the bridge electrode may be disposed in each of the first modulation region, the second modulation region, and a conversion region, and quantities of bridge electrodes in the first modulation region, the second modulation region, and the conversion region are not limited. In an example, the foregoing electrodes are designed based on a metal layer 1, a metal layer 2 is further disposed on the metal layer 1, and the bridge electrode is designed based on the metal layer 2. In another example, the foregoing electrodes are designed based on a metal layer 1, and the bridge electrode electrically connects the first electrode to the fourth electrode at the metal layer 1 through a bonding wire (wire-bonding).

It should be noted that, in some possible scenarios, the specified electrode structure 1 may be the T-shape electrode structure, and the specified electrode structure 2 may be the inverted T-shape electrode structure. In addition to the T-shape electrode structure and the inverted T-shape electrode structure that are described in FIG. 4 and FIG. 6, the specified electrode structure 1 and the specified electrode structure 2 may alternatively be another electrode structure, for example, an L-shape electrode structure or a Z-shape electrode structure, to achieve same effects. This is not specifically limited herein. It should be understood that parameters of the specified electrode structure 1 and the specified electrode structure 2 are designed, to optimize impedance matching and speed matching of a link and ensure a bandwidth advantage.

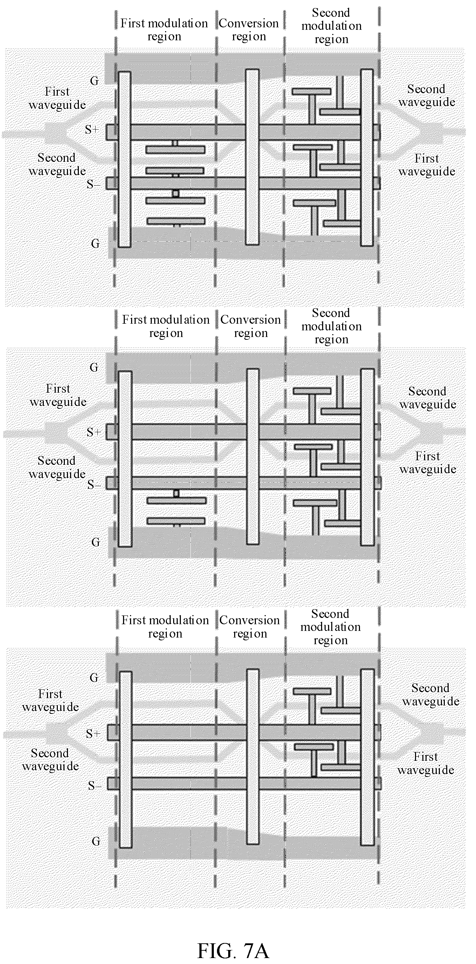

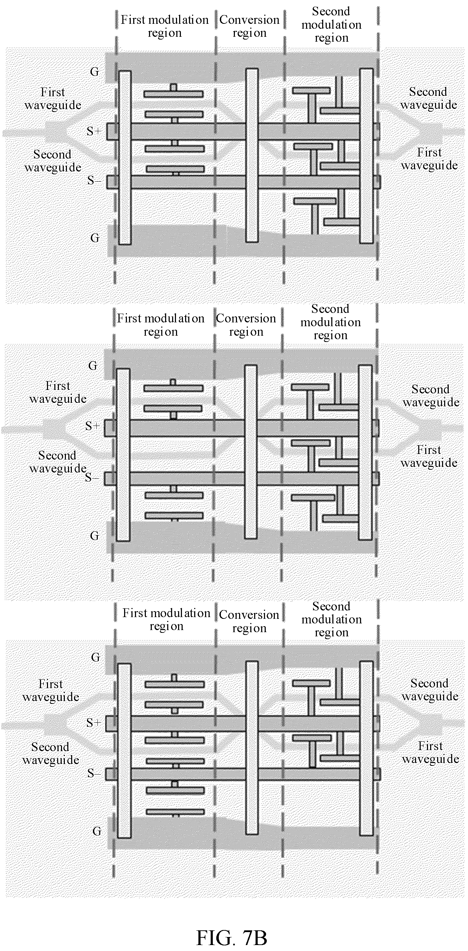

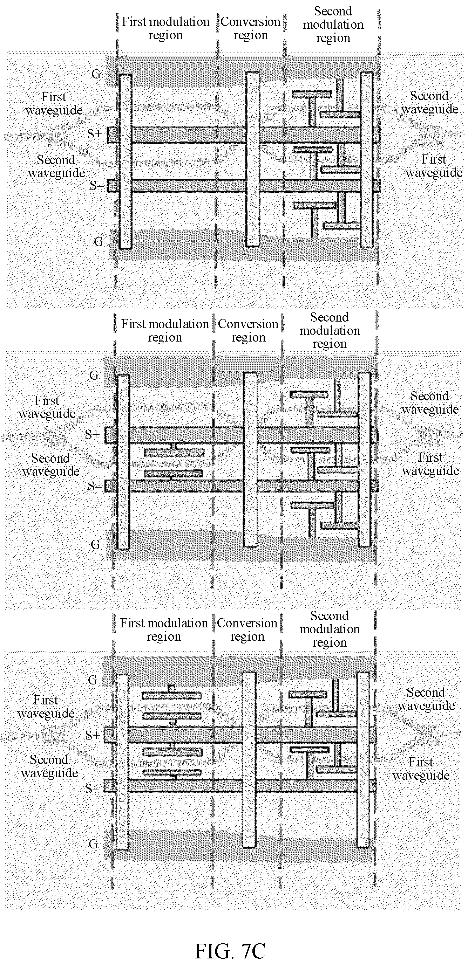

FIG. 7A, FIG. 7B, and FIG. 7C are a diagram of several distribution forms of a specified electrode structure in an electro-optic modulator. As shown in FIG. 7A, FIG. 7B, and FIG. 7C, an example in which a specified electrode structure 1 is an inverted T-shape electrode structure and a specified electrode structure 2 is a T-shape electrode structure is used. Based on FIG. 4, proper deformation may be further performed, so that some T-shape electrode structures and/or inverted T-shape electrode structures are omitted. Specifically, in a region without a waveguide, the T-shape electrode structure and/or the inverted T-shape electrode structure may be omitted, and in a region with a waveguide but in which a direction of an electric field between electrodes does not need to be changed, the T-shape electrode structure may be omitted. It should be understood that omitting the T-shape electrode structure and/or the inverted T-shape electrode structure affects modulation efficiency and a modulation bandwidth of the electro-optic modulator, and is a change at the cost of device performance.

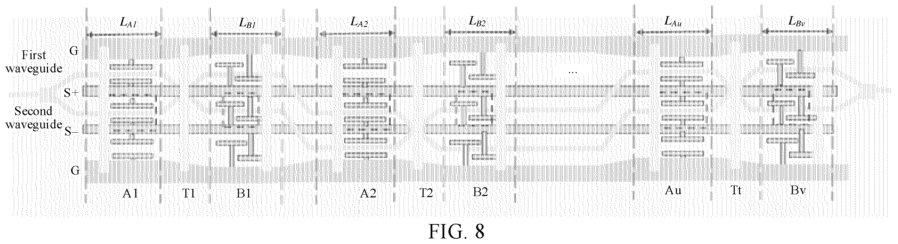

FIG. 8 is a diagram of a sixth structure of an electro-optic modulator according to an embodiment of this application. As shown in FIG. 8, in a solution in which the electro-optic modulator has u first modulation regions, v second modulation regions, and t conversion regions, a first waveguide and a second waveguide in any conversion region may use the cross structure shown in FIG. 3 and FIG. 4, or may use the bending structure shown in FIG. 5 and FIG. 6. A specific form of each conversion region is subject to an actual application. This is not limited herein.

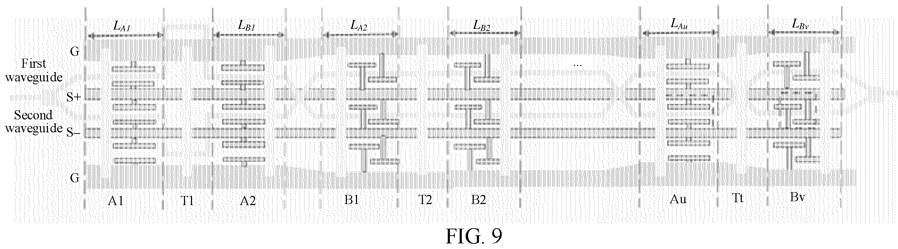

FIG. 9 is a diagram of a seventh structure of an electro-optic modulator according to an embodiment of this application. As shown in FIG. 9, in a solution in which the electro-optic modulator has u first modulation regions, v second modulation regions, and t conversion regions, in addition to a conversion region located between the first modulation region and the second modulation region, there are also some conversion regions located between two first modulation regions or between two second modulation regions. In other words, the first modulation region and the second modulation region may not be sequentially arranged at an interval, and may be arranged in a manner of A1, A2, B1, B2, ..., Au, and Bv shown in FIG. 9. It should be understood that a first waveguide and a second waveguide in the conversion region located between two first modulation regions or located between two second modulation regions do not form the foregoing cross structure or bending structure but form an extension structure. In this way, first waveguides in two adjacent first modulation regions or two adjacent second modulation regions are located between two same electrodes (for example, between an S+ electrode and a G electrode shown in FIG. 9), and the second waveguides in two adjacent first modulation regions or two adjacent second modulation regions are located between two same electrodes (for example, between the S+ electrode and an S- electrode shown in FIG. 9).

It can be learned from descriptions of the foregoing embodiments that the electro-optic modulator includes the first waveguide, the second waveguide, the at least one first modulation region, and the at least one second modulation region. The electric fields applied to the first waveguide and the second waveguide in the first modulation region have some features different from features of the electric fields applied to the first waveguide and the second waveguide in the second modulation region, so that the absolute value of the optical path difference generated by the first waveguide in the first modulation region is approximate to or equal to the absolute value of the optical path difference generated by the second waveguide in the second modulation region, and the absolute value of the optical path difference generated by the second waveguide in the first modulation region is approximate to or equal to the absolute value of the optical path difference generated by the first waveguide in the second modulation region. On the basis that the foregoing conditions are satisfied, the impact of the chirp effect on the transmission performance can be effectively reduced, and preferably, the chirp-free electro-optic modulation can be implemented.

An electro-optic modulator manufacturing method provided in this application is described below. Herein, the electro-optic modulator shown in FIG. 4 is specifically used as an example for description.

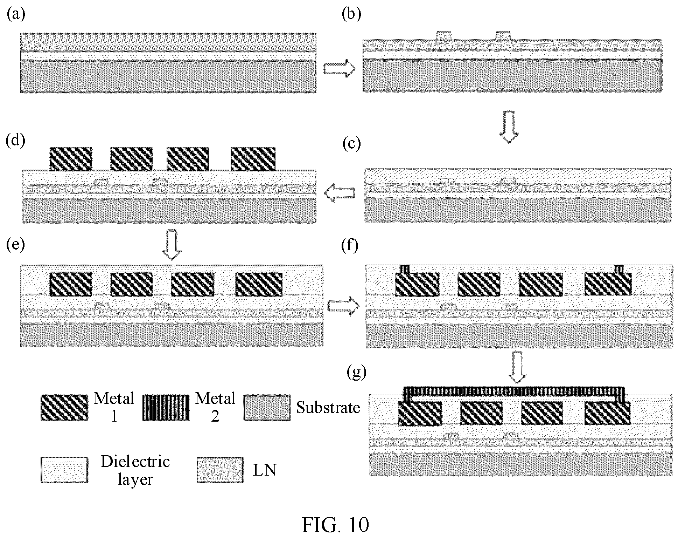

FIG. 10 is a schematic flowchart of manufacturing an electro-optic modulator according to an embodiment of this application. FIG. 10 is a diagram of a longitudinal section in a thickness direction of the electro-optic modulator. An example in which a first waveguide and a second waveguide use LN materials is used. A procedure of manufacturing the electro-optic modulator may broadly include seven steps (a) to (g) in total.

(a) to (b): Perform optical waveguide patterning on LNOI, to complete etching on an LN waveguide, including the first waveguide, the second waveguide, and another optical waveguide.
(b) to (c): After the waveguide etching is completed, deposit, polish, and smooth a dielectric layer (for example, silicon dioxide).
(c) to (d): Define a metal electrode position on the deposited dielectric layer, and grow a first electrode to a fourth electrode.
(d) to (e): After growing of a layer of metal 1 is completed, deposit and smooth a dielectric layer (for example, silicon dioxide).
(e) to (f): Form through holes in the dielectric layer above the first electrode and the fourth electrode, and inject metal.
(f) to (g): Grow a layer of metal 2 above the second dielectric layer, and communicate the metal through holes formed in the previous step.

It should be noted that the foregoing embodiments are merely used to describe technical solutions of this application, but not to limit the technical solutions. Although this application is described in detail with reference to the foregoing embodiments, a person of ordinary skill in the art should understand that modifications can be made to the technical solutions described in the foregoing embodiments, or equivalent replacements can be made to some technical features thereof without departing from the spirit and scope of the technical solutions of embodiments of this application.

## Claims

1. An electro-optic modulator, comprising a first waveguide, a second waveguide, at least one first modulation region, and at least one second modulation region, wherein the first modulation region and the second modulation region are distributed in a first direction in which the first waveguide and the second waveguide extend, electric fields applied to the first waveguide in the first modulation region and the second modulation region have a same direction and different magnitudes, electric fields applied to the second waveguide in the first modulation region and the second modulation region have a same direction and different magnitudes, the electric fields applied to the first waveguide and the second waveguide in the first modulation region have different magnitudes and opposite directions, the electric fields applied to the first waveguide and the second waveguide in the second modulation region have different magnitudes and opposite directions, a difference between an absolute value of an optical path difference generated by the first waveguide in the first modulation region and an absolute value of an optical path difference generated by the second waveguide in the second modulation region is less than a preset value, and a difference between an absolute value of an optical path difference generated by the second waveguide in the first modulation region and an absolute value of an optical path difference generated by the first waveguide in the second modulation region is less than the preset value.

2. The electro-optic modulator according to claim 1, wherein the electro-optic modulator comprises a first electrode, a second electrode, a third electrode, and a fourth electrode, the first electrode, the second electrode, the third electrode, and the fourth electrode extend in the first direction separately, the first electrode, the second electrode, the third electrode, and the fourth electrode are sequentially distributed in a second direction, the first direction is perpendicular to the second direction, and every two adjacent electrodes in the first electrode, the second electrode, the third electrode, and the fourth electrode are for forming an electric field.

3. The electro-optic modulator according to claim 2, wherein the first electrode and the fourth electrode are grounded, and differential drive signals respectively enter the second electrode and the third electrode.

4. The electro-optic modulator according to claim 2 or 3, wherein the electro-optic modulator further comprises a conversion region, the conversion region is located between the first modulation region and the second modulation region, and the first waveguide and the second waveguide form a cross structure in the conversion region; and in the first modulation region, the first waveguide is located between the first electrode and the second electrode, and the second waveguide is located between the second electrode and the third electrode; and in the second modulation region, the first waveguide is located between the second electrode and the third electrode, and the second waveguide is located between the first electrode and the second electrode.

5. The electro-optic modulator according to claim 4, wherein a first specified electrode structure is formed between the first electrode and the second electrode in the second modulation region, and the first specified electrode structure is configured to cause a direction of an electric field between the first electrode and the second electrode in the second modulation region to be opposite to a direction of an electric field between the first electrode and the second electrode in the first modulation region; and

a second specified electrode structure is formed between the second electrode and the third electrode in the second modulation region, and the second specified electrode structure is configured to cause a direction of an electric field between the second electrode and the third electrode in the second modulation region to be opposite to a direction of an electric field between the second electrode and the third electrode in the first modulation region.

6. The electro-optic modulator according to claim 4 or 5, wherein a third specified electrode structure is formed between the first electrode and the second electrode in the first modulation region, and the third specified electrode structure is configured to enhance strength of the electric field applied to the first waveguide; and

a fourth specified electrode structure is formed between the second electrode and the third electrode in the first modulation region, and the fourth specified electrode structure is configured to enhance strength of the electric field applied to the second waveguide.

7. The electro-optic modulator according to claim 2 or 3, wherein the electro-optic modulator further comprises a conversion region, the conversion region is located between the first modulation region and the second modulation region, and both the first waveguide and the second waveguide are of bending structures in the conversion region; and

in the first modulation region, the first waveguide is located between the first electrode and the second electrode, and the second waveguide is located between the second electrode and the third electrode; and in the second modulation region, the first waveguide is located between the second electrode and the third electrode, and the second waveguide is located between the third electrode and the fourth electrode.

8. The electro-optic modulator according to claim 7, wherein a first specified electrode structure is formed between the second electrode and the third electrode in the second modulation region, and the first specified electrode structure is configured to cause a direction of an electric field between the second electrode and the third electrode in the second modulation region to be opposite to a direction of an electric field between the second electrode and the third electrode in the first modulation region; and

a second specified electrode structure is formed between the third electrode and the fourth electrode in the second modulation region, and the second specified electrode structure is configured to cause a direction of an electric field between the third electrode and the fourth electrode in the second modulation region to be opposite to a direction of an electric field between the third electrode and the fourth electrode in the first modulation region.

9. The electro-optic modulator according to claim 7 or 8, wherein a third specified electrode structure is formed between the first electrode and the second electrode in the first modulation region, and the third specified electrode structure is configured to enhance strength of the electric field applied to the first waveguide; and

a fourth specified electrode structure is formed between the second electrode and the third electrode in the first modulation region, and the fourth specified electrode structure is configured to enhance strength of the electric field applied to the second waveguide.

10. The electro-optic modulator according to any one of claims 2 to 9, wherein the first electrode is electrically connected to the fourth electrode in the first modulation region and the second modulation region.

11. The electro-optic modulator according to any one of claims 1 to 10, wherein quantities of first modulation regions and second modulation regions are plural and are the same, every two consecutive first modulation regions are separated by one second modulation region, and every two consecutive second modulation regions are separated by one first modulation region.

12. The electro-optic modulator according to any one of claims 1 to 11, wherein the electro-optic modulator further comprises a beam splitting module and a beam combining module, two ends of the first waveguide are respectively connected to the beam splitting module and the beam combining module, and two ends of the second waveguide are respectively connected to the beam splitting module and the beam combining module;

the beam splitting module is configured to: split input light, and separately transmit split light to the first waveguide and the second waveguide; and

the beam combining module is configured to combine the light transmitted by the first waveguide and the light transmitted by the second waveguide.

13. The electro-optic modulator according to any one of claims 1 to 12, wherein impedances of the first modulation region and the second modulation region that are adjacent match.

**14.** The electro-optic modulator according to any one of claims 1 to 13, wherein materials used by the first waveguide and the second waveguide comprise any one of lithium niobate LN, silicon, and silicon nitride.

**15.** A transmitter, comprising at least one laser, a driver, and at least one electro-optic modulator according to any one of claims 1 to 14, wherein

the at least one laser is configured to emit contiguous light; and
the driver is configured to drive the at least one electro-optic modulator to modulate the contiguous light to obtain an optical signal.

**16.** The transmitter according to claim 15, wherein the transmitter comprises a plurality of lasers and a plurality of electro-optic modulators, and the transmitter further comprises a wavelength division multiplexer; and
the wavelength division multiplexer is configured to: multiplex optical signals output by the plurality of electro-optic modulators, and output a multiplexed optical signal.

Transmitter (electro/optical conversion)

Receiver (optical/electro conversion)

Laser  Modulator

Electrical chip

Wavelength division multiplexer

Transmission optical fiber

Wavelength division demultiplexer

Optical detector

Electrical chip

FIG. 1

FIG. 2

FIG. 3

Specified electrode structure 2                    Specified electrode structure 1

FIG. 4

FIG. 5

FIG. 6

FIG. 7A

FIG. 7B

FIG. 7C

FIG. 8

FIG. 9

(a)　　　　　　　　　　　　　　　　　　　　　　(b)

(d)　　　　　　　　　　　　　　　　　　　　　　(c)

(e)　　　　　　　　　　　　　　　　　　　　　　(f)

(g)

Metal 1　　Metal 2　　Substrate

Dielectric layer　　LN

FIG. 10

# EP 4 625 027 A1

## INTERNATIONAL SEARCH REPORT

| | International application No. |
|---|---|
| | **PCT/CN2024/071777** |

### A. CLASSIFICATION OF SUBJECT MATTER

G02F1/03(2006.01)i

According to International Patent Classification (IPC) or to both national classification and IPC

### B. FIELDS SEARCHED

Minimum documentation searched (classification system followed by classification symbols)

IPC: G02F

Documentation searched other than minimum documentation to the extent that such documents are included in the fields searched

Electronic data base consulted during the international search (name of data base and, where practicable, search terms used)

CNABS; CNTXT; CNKI; VEN; ENTXT; ENTXTC; WPABS; WPABSC: 马赫增德, 马赫泽德, 波导, 调制, 电极, 行波, 差分, 相位, 啁啾, 相移, 补偿, MZM, MZI, modulat????, waveguide, electrode, GSSG, phase, chirp???, compensat????

### C. DOCUMENTS CONSIDERED TO BE RELEVANT

| Category* | Citation of document, with indication, where appropriate, of the relevant passages | Relevant to claim No. |
|---|---|---|
| A | CN 113570051 A (LIGHTELLIGENCE, INC.) 29 October 2021 (2021-10-29) description, paragraphs [0152]-[0170], and figures 9-15 | 1-16 |
| A | CN 115128801 A (BEIJING JOURNEY TECHNOLOGY, INC.) 30 September 2022 (2022-09-30) entire document | 1-16 |
| A | CN 111308740 A (SUZHOU KANGGUAN PHOTOELECTRIC TECHNOLOGY CO., LTD.) 19 June 2020 (2020-06-19) entire document | 1-16 |
| A | CN 102648434 A (NEC CORP.) 22 August 2012 (2012-08-22) entire document | 1-16 |
| A | JP 2014178480 A (NIPPON TELEGRAPH & TELEPHONE CORPORATION) 25 September 2014 (2014-09-25) entire document | 1-16 |
| A | US 2022326586 A1 (ALOE SEMICONDUCTOR INC.) 13 October 2022 (2022-10-13) entire document | 1-16 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 April 2024** | **15 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/071777**

| Patent document cited in search report | | | Publication date (day/month/year) | Patent family member(s) | | | Publication date (day/month/year) |
|---|---|---|---|---|---|---|---|
| CN | 113570051 | A | 29 October 2021 | None | | | |
| CN | 115128801 | A | 30 September 2022 | None | | | |
| CN | 111308740 | A | 19 June 2020 | None | | | |
| CN | 102648434 | A | 22 August 2012 | CN | 102648434 | B | 31 December 2014 |
| JP | 2014178480 | A | 25 September 2014 | None | | | |
| US | 2022326586 | A1 | 13 October 2022 | US | 11543728 | B2 | 03 January 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310158437